# EUROPEAN PATENT APPLICATION

(11) **EP 1 655 275 A2**
(43) Date of publication of application: **10.05.2006**
(21) Application number: 05077332.4
(22) Date of filing: 12.10.2005
(51) Int. Cl.: C05B 17/00, C05G 5/00, C05G 3/02, C05D 9/02

(54) **Fertilizer composition containing calcium phosphite**

(30) Priority: 12.10.2004 US 617818 P; 27.12.2004 US 639245
(71) Applicant: Baigro Western Sales Inc., Visalia, CA 93292 (US)
(72) Inventor: Grech, Nigel, Reedley, CA 93654 (US); Peterson, John, Fresno, CA 93722 (US)
(74) Representative: Docherty, Robert Charles

(57) **Abstract**

Calcium phosphite containing fertilizers, as well as methods of making and methods of using these fertilizers, are disclosed.

## Description

This application is a non-provisional filing of U.S. Provisional Patent Application No. 60/639,245 filed on December 27, 2004, and U.S. Provisional Patent Application No. 60/617,818 filed on October 12, 2004, the disclosure of which is incorporated herein by reference in its entirety for all purposes.

### BACKGROUND OF THE INVENTION

Fertilizers provide chemical elements required for the growth of plants. These elements are classified, depending on the quantity required for the crops, into macro nutrients [nitrogen (N), phosphorus (P) potassium (K), calcium (Ca), magnesium (Mg), and sulfur (S)] and micro nutrients [boron (B), cobalt (Co), copper (Cu), iron (Fe), manganese (Mn), molybdenum (Mo) and zinc (Zn)].

Calcium plays a central role in plant physiology. Calcium is involved in the structure and permeability of plant cell walls, thus providing strength to the plant. Calcium also enhances the uptake of nitrates and therefore is interrelated with nitrogen metabolism. The presence of calcium is also essential for cell elongation, cell division, and regulation of cation uptake. Calcium deficiency manifests itself in the failure of terminal buds of shoot and apical tips of roots to develop.

Due to the chemical properties of calcium the element can be difficult to provide to a plant. Calcium supply to the roots is affected by temperature, oxygen, soil water content, other nutrient levels and microbial activity. In addition, certain common forms of calcium, such as calcium nitrate and calcium chloride, are water soluble and are easily washed away from the plant site. Therefore, calcium can be a difficult element to provide to the primary uptake routes in the plant, such as the roots.

Calcium moves primarily acropetally in the plant. Calcium is generally considered an immobile element in the plant. Little translocation of calcium occurs in the phloem, which helps to explain the poor supply of calcium often found in fruits and storage organs. Downward translocation of calcium is also extremely limited. In most environments, horticultural and agricultural crops will encounter some degree of limitation in the supply of calcium. An example of this is the disorder called Blossom End Rot of Tomatoes. Because of this immobility within the plant, it is important to supply calcium to both the upper parts of \the plant, through the leaves, as well as the lower parts of the plant, through the roots during the plant growth cycle.

The use of fertilizers to supply calcium to the roots of plants is known in the art. Soil amendments such as lime, which contains calcium carbonate, and gypsum, which contains calcium sulfate, are often added to the soil. These calcium delivery methods are not ideal. Lime has problems owing to the water solubility of calcium carbonate. Gypsum has problems owing to the low uptake of calcium sulfate by the plant. Therefore, there is a need for improved compositions and methods of supplying calcium to the roots of plants.

Foliar application of calcium has been attempted through the use of such watersoluble calcium salts as calcium formate (JP-A 59-137384), calcium acetate (JP-A 60-260487), calcium propionate (JP-A 4-202080), calcium chloride and calcium nitrate and so on (also see Sheppardson, U.S. Pat. Pub. No. 2003/0029211 A1). Further, calcium fertilizers obtained by combining highly soluble calcium salts with lowly soluble ones have been also known (JP-A 7-10666). Meanwhile, WO98/06681 publicly opened on Feb. 19, 1998 discloses the addition of heptanoic acid or sodium heptonate and a surfactant to fertilizers. The foliar application of these calcium salts is not ideal. These compositions have the problem of poor absorption efficiency because the absorption of calcium through the leaves and the fruits of a plant is generally very low. Further the chemical environment that calcium is formulated into greatly influences plant uptake. For instance, high levels of nitrogen inhibit calcium uptake.

Another type of calcium salt, calcium phosphite (CaHPO₃), has the advantage of being sparingly soluble in water. This allows the inorganic compound to linger at the site of application longer, thus increasing the potential for uptake into the plant. Calcium phosphite has been known for its fertilizer properties since at least the 1990s through Lovatt (U.S. Pat. No. 5,514,200, which issued May 7, 1996; 5,830,255, which issued November 3, 1998; 6,113,665, which issued Sept. 5, 2000; and 6,645,268 B2, which issued November 11, 2003) (U.S. Pat. App. No. 09/637,621, filed August 11, 2000; 10/686,411, filed October 14, 2003). Curiously, calcium phosphite has been cited for years as a fertilizer in the Merck Index (M. Windhols, ed., 10th edition, p.1678 (1983)), though no phosphite fertilizer compositions are listed during that period in The Farm Chemical Handbook (Meister Publishing Co., Willoughby, OH, p. 834 (1993)) or Western Fertilizer Handbook (The Interstate, Danville, IL, p. 288). Historically, calcium phosphite was formed as a putative contaminant in the synthesis of calcium superphosphate fertilizers [McIntyre *et al., Agron. J*., **42**:543-549 (1950)] and in one case, was demonstrated to cause injury to corn [Lucas *et al., Agron. J*., 71:1063-1065 (1979)]. Consequently, prior to the discovery by Lovatt, phosphite was relegated for use only as a fungicide (Alliete.RTM.; U.S. Pat. No. 4,075,324) and as a food preservative.

The Lovatt patents disclose clear fertilizer compositions containing calcium hydroxide in amounts up to 5.4% Ca. These fertilizer compositions are achieved through the combination of two calcium-containing solutions. In general, compositions which contain higher concentrations of nutrients are preferred since this reduces both the monetary costs associated with repeated application as well as the environmental costs of excess fertilizer runoff into groundwater, lakes, ponds and streams. Therefore, despite the efforts described above, there still remains a need for improved fertilizer compositions which can efficiently provide calcium to a plant. The present invention fulfills this need, as well as others.

### BRIEF SUMMARY OF THE INVENTION

The present invention discloses calcium phosphite containing fertilizers, as well as methods of making and methods of using these fertilizers.

Thus, in a first aspect, the invention provides a fertilizer concentrate comprising a suspension of calcium phosphite. The amount of calcium phosphite in the fertilizer concentrate is about 0.125 kg of calcium phosphite/kg of fertilizer or greater, and the suspension is a member selected from an aqueous suspension or a non-aqueous suspension.

In an embodiment of the invention, the fertilizer concentrate further comprises one or more organic acids. In another embodiment of the invention, the organic acid is a member selected from monocarboxylic acids, dicarboxylic acids and tricarboxylic acids. In yet another embodiment of the invention, the organic acid is citric acid. In still another embodiment of the invention, the organic acid is malic acid. In another embodiment of the invention, the organic acid is present in an amount of from about 0.005 kg/kg to about 0.2 kg/kg. In an embodiment of the invention, the citric acid is present in an amount of from about 0.005 kg/kg to about 0.2 kg/kg. In an embodiment of the invention, the malic acid is present in an amount of from about 0.005 kg/kg to about 0.2 kg/kg.

In an embodiment of the invention, the fertilizer concentrate further comprises a sulfur compound. In another embodiment of the invention, the sulfur compound is a member selected from sulfone, sulfate, sulfide, sulfite, and organosulfur. In another embodiment of the invention, the sulfur compound is a sulfone. In yet another embodiment of the invention, the sulfone is dimethyl sulfone. In an embodiment of the invention, the sulfur compound is present in an amount of from about 0.01 kg/kg to about 0.2 kg/kg.

In an embodiment of the invention, the fertilizer concentrate further comprises a thickener. In another embodiment of the invention, the thickener is xanthan gum. In another embodiment of the invention, the thickener is present in an amount of from about 0.001 kg/kg to about 0.05 kg/kg.

In an embodiment of the invention, the fertilizer concentrate further comprises a humectant. In another embodiment of the invention, the humectant is a polyalcohol. In another embodiment of the invention, the humectant is present in an amount of from about 0.001 kg/kg to about 0.2 kg/kg.

In an embodiment of the invention, the fertilizer concentrate further comprises an antimicrobial. In another embodiment of the invention, the antimicrobial is 1,2-benzisothiazolin-3-one. In another embodiment of the invention, the antimicrobial is present in an amount of from about 0.0005 kg/kg to about 0.05 kg/kg.

In an embodiment of the invention, the fertilizer concentrate further comprises a naphthalene condensate. In another embodiment of the invention, the naphthalene condensate is a copolymer. In another embodiment of the invention, the copolymer comprises formaldehyde and a naphthalene-containing compound, wherein said naphthalene-containing compound is a member selected from naphthalene sulfonic acid and salts thereof. In another embodiment of the invention, the naphthalene condensate is present in an amount of from about 0.0005 kg/kg to about 0.05 kg/kg.

In an embodiment of the invention, the fertilizer concentrate further comprises a pesticide. In another embodiment of the invention, the pesticide is mancozeb. In another embodiment of the invention, the pesticide is present in an amount of from about 0.01 kg/kg to about 0.6 kg/kg.

In an embodiment of the invention, the fertilizer concentrate further comprises a plant growth regulator. In another embodiment of the invention, the plant growth regulator is gibberellic acid. In another embodiment of the invention, the plant growth regulator is present in an amount of from about 0.0005 kg/kg to about 0.1 kg/kg.

In an embodiment of the invention, the fertilizer concentrate further comprises a herbicide. In another embodiment of the invention, the herbicide is present in an amount of from about 0.01 kg/kg to about 0.6 kg/kg.

In an embodiment of the invention, the fertilizer concentrate further comprises a boron compound. In another embodiment of the invention, the boron compound is a member selected from boric acid and borate. In another embodiment of the invention, the boron compound is present in an amount of from about 0.001 kg/kg to about 0.05 kg/kg.

In an embodiment of the invention, the fertilizer concentrate further comprises a phosphorus-containing acid. In another embodiment of the invention, the phosphorus-containing acid is a member selected from phosphoric acid, phosphorous acid, hypophosphorous acid, polyphosphorous acid, polyhypophosphorous acid and combinations thereof. In another embodiment of the invention, the phosphorus-containing acid is phosphorous acid. In another embodiment of the invention, the phosphorus-containing acid is present in an amount of from about 0.01 kg/kg to about 0.5 kg/kg.

In an embodiment of the invention, the fertilizer concentrate further comprises an inorganic base. In another embodiment of the invention, the inorganic base is a member selected from potassium hydroxide, calcium hydroxide, sodium hydroxide, ammonium hydroxide, and their respective oxides. In another embodiment of the invention, the inorganic base is present in an amount of from about 0.01 kg/kg to about 0.5 kg/kg.

In an embodiment of the invention, the fertilizer concentrate further comprises a plant nutrient, wherein said plant nutrient is a member selected from nitrogen, potassium, magnesium, iron, manganese, molybdenum, zinc, copper, and ammonia. In another embodiment of the invention, the fertilizer has a pH that prevents its separation into two phases. In another embodiment of the invention, the fertilizer has a pH of from about 5.0 to about 9.5. In another embodiment of the invention, the fertilizer has a pH of from about 6.0 to about 9.0. In another embodiment of the invention, the fertilizer has a pH of about 8.0.

In an embodiment of the invention, the fertilizer concentrate further comprises a surfactant. In another embodiment of the invention, the surfactant is present in an amount of from about 0.008 kg/kg to about 0.1 kg/kg.

In a second aspect, the invention provides a ready-to-use fertilizer, comprising a fertilizer concentrate of the invention and a diluent. In another embodiment of the invention, the diluent is a liquid. In another embodiment of the invention, the diluent is a solid. In another embodiment of the invention, the ratio of fertilizer concentrate to diluent is from about 1:10 to about 1:10,000. In another embodiment of the invention, the ratio of fertilizer concentrate to diluent is from about 1:20 to about 1:2,000.

Other objects and advantages of the invention will be apparent to those of skill in the art from the detailed description that follows.

### BRIEF DESCRIPTION OF THE DRAWINGS

**FIG. 1** is a table listing the concentration of ions in solution in the fertilizer concentrate.

**FIG. 2** is a table listing the percentages of nutrients and elements in the tissues of romaine lettuce plants, after the application of a ready-to-use fertilizer comprising one of fertilizer concentrates A-H. The ready-to-use fertilizer of the invention comprises fertilizer concentrate B.

**FIG. 3** is a chart listing the percentages of nitrogen in the tissues of romaine lettuce plants, after the application of a ready-to-use fertilizer comprising one of fertilizer concentrates A-H. The ready-to-use fertilizer of the invention comprises fertilizer concentrate B.

**FIG. 4** is a table listing the percentages of nutrients and elements in the tissues of lettuce plants after the application of a ready-to-use fertilizer comprising one of fertilizer concentrates A-H. The ready-to-use fertilizer of the invention comprises fertilizer concentrate B.

**FIG. 5** is a table listing the percentages of nutrients and elements in the tissues of celery leaves after the application of a ready-to-use fertilizer comprising one of fertilizer concentrates A-H. The ready-to-use fertilizer of the invention comprises fertilizer concentrate B.

**FIG. 6** is a table listing the percentages of nutrients and elements in the tissues of potato plants after the application of a ready-to-use fertilizer comprising one of fertilizer concentrates A-H. The ready-to-use fertilizer of the invention comprises fertilizer concentrate B.

**FIG. 7** is a chart listing the number of Harvestable Boxes of Table Grapes obtained per acre using a grower's standard, PKS, and a ready-to-use fertilizer of the invention. A harvestable box contains 15 lbs of fruit.

**FIG. 8** is a chart listing the average vegetative biomass yield, in grams, of Bell Peppers obtained per acre using a grower's standard ("control") and a ready-to-use fertilizer of the invention.

### DETAILED DESCRIPTION OF THE INVENTION

### I. A. Definitions

Unless defined otherwise, all technical and scientific terms used herein generally have the same meaning as commonly understood by one of ordinary skill in the art to which this invention belongs. Generally, the nomenclature used herein and the laboratory procedures in agriculture and chemistry are those well known and commonly employed in the art. Standard techniques are used synthesis of the compositions. The techniques and procedures are generally performed according to conventional methods in the art and various general references *(see generally*, Tisdale *et al*. SOIL FERTILITY AND FERTILIZERS, 6th ed. (1998) Prentice Hall, New York, which is incorporated herein by reference), which are provided throughout this document. The nomenclature used herein and the laboratory procedures in analytical chemistry, and organic synthetic described below are those well known and commonly employed in the art. Standard techniques, or modifications thereof, are used for chemical syntheses and chemical analyses.

The term "fertilizer", as used herein, means compositions which supply nutrients to, and stimulate the growth of, plants. A fertilizer can be a liquid or a solid.

The term "aqueous suspension", as used herein, means that the predominant liquid in the fertilizer is water. In some embodiments, the only liquid in the fertilizer is water. In other embodiments, there is more than one liquid in the fertilizer, but the predominant liquid is water. For example, the liquid portion of an aqueous suspension fertilizer can comprise 75% water and 25% soybean oil. An aqueous suspension can refer to either a liquid fertilizer concentrate or a liquid ready-to-use fertilizer.

The term "non-aqueous suspension", as used herein, means that the predominant liquid in the fertilizer is an oil. In some embodiments, the only liquid in the fertilizer is an oil. Examples of oils include soybean oil, canola oil, and mineral oil. In other embodiments, there is more than one liquid in the fertilizer, but the predominant liquid is oil. For example, the liquid portion of a non-aqueous suspension fertilizer can comprise 66% soybean oil and 33% water. A non-aqueous suspension can refer to either a liquid fertilizer concentrate or a liquid ready-to-use fertilizer.

The term "organic acid", as used herein, means a molecule that comprises carbon and that possess a pKa relative to water of about 10 or less.

The term "N-P-K", as used herein, means the amount of nitrogen, phosphorus, and potassium, in that order, that are present in a fertilizer in amounts equivalent to the weight percentages ofN, P₂O₅, and K₂O. For example, a 10-20-15 fertilizer contains nutrients equivalent to 10% of N, 20% of P₂O₅, and 15% of K₂O in weight / weight. Although the nutrients do not actually exist in a fertilizer in the forms of N, P₂O₅, or K₂O, these species are used as reference measures due to historic reasons.

The term "thickener", as used herein, means a material that increases the viscosity of a liquid. In this document, "thickener", "suspending agent", "stabilizing agent", "viscosity-increasing agent" and "binding agent" are used interchangeably.

The term "humectant", as used herein, means a compound that promotes retention and absorption of moisture.

The term "antimicrobial", as used herein, means capable of destroying or inhibiting the growth of microorganisms. In this document, "antimicrobial", "antibacterial" and "antibiotic" are used interchangeably.

The term "surfactant", as used herein, means a compound which decreases the surface tension between surfaces and allows for greater dispersion of the material on plant surfaces. In this document, "surfactant", "detergent", "wetting agent" and "dispersant" are used interchangeably.

The term "plant growth regulator", as used herein, means a synthetic or naturally produced chemical that either inhibits or accelerates plant growth. In this document, "plant growth regulator" and "hormone" are used interchangeably.

The term "diluent", as used herein, means a material that is used to increase the size or volume of the fertilizer. A diluent can be either a liquid or a solid. Examples of liquid diluents include water, soybean oil, and mineral oil. Examples of solid diluents include clay, sand, peat and chalk.

The term "fertilizer concentrate", as used herein, means a fertilizer that requires the addition of a diluent prior to application to a plant. Fertilizer concentrates can be either liquid or solid. This term is sometimes known in the art as a "formulated product".

The term, "ready-to-use fertilizer", as used herein, means a material which, at a minimum, does not cause phytotoxicity after application to a plant. Under optimal conditions, this material will facilitate the uptake of calcium and phosphorus in a plant. This term is soemtimes known in the art as a "tank mix".

The term, "fertilizers of the invention", as used herein, comprises fertilizer concentrates as well as ready-to-use fertilizers.

The term "alkyl," by itself or as part of another substituent, means, unless otherwise stated, a straight or branched chain, or cyclic hydrocarbon radical, or combination thereof, which may be fully saturated, mono- or polyunsaturated and can include di- and multivalent radicals, having the number of carbon atoms designated (*i.e.* C₁-C₁₀ means one to ten carbons). Examples of saturated hydrocarbon radicals include, but are not limited to, groups such as methyl, ethyl, n-propyl, isopropyl, n-butyl, t-butyl, isobutyl, sec-butyl, cyclohexyl, (cyclohexyl)methyl, cyclopropylmethyl, homologs and isomers of, for example, n-pentyl, n-hexyl, n-heptyl, n-octyl, and the like. An unsaturated alkyl group is one having one or more double bonds or triple bonds. Examples of unsaturated alkyl groups include, but are not limited to, vinyl, 2-propenyl, crotyl, 2-isopentenyl, 2-(butadienyl), 2,4-pentadienyl, 3-(1,4-pentadienyl), ethynyl, 1- and 3-propynyl, 3-butynyl, and the higher homologs and isomers. The term "alkyl," unless otherwise noted, is also meant to include those derivatives of alkyl defined in more detail below, such as "heteroalkyl." Alkyl groups, which are limited to hydrocarbon groups are termed "homoalkyl".

The term "heteroalkyl," by itself or in combination with another term, means, unless otherwise stated, a stable straight or branched chain, or cyclic hydrocarbon radical, or combinations thereof, consisting of the stated number of carbon atoms and at least one heteroatom selected from the group consisting of O, N, Si and S, and wherein the nitrogen and sulfur atoms may optionally be oxidized and the nitrogen heteroatom may optionally be quaternized. The heteroatom(s) O, N and S and Si may be placed at any interior position of the heteroalkyl group or at the position at which the alkyl group is attached to the remainder of the molecule. Examples include, but are not limited to, -CH₂-CH₂-O-CH₃, -CH₂-CH₂-NH-CH₃, -CH₂-CH₂-N(CH₃)-CH₃, -CH₂-S-CH₂-CH₃, -CH₂-CH₂,-S(O)-CH₃, -CH₂-CH₂-S(O)₂₋CH₃, -CH=CH-O-CH₃, -Si(CH₃)₃, -CH₂-CH=N-OCH₃, and -CH=CH-N(CH₃)-CH₃. Up to two heteroatoms may be consecutive, such as, for example, -CH₂-NH-OCH₃ and -CH₂-O-Si(CH₃)₃. Similarly, the term "heteroalkylene" by itself or as part of another substituent means a divalent radical derived from heteroalkyl, as exemplified, but not limited by, -CH₂₋CH₂-S-CH₂-CH₂- and -CH₂-S-CH₂-CH₂-NH-CH₂-. For heteroalkylene groups, heteroatoms can also occupy either or both of the chain termini (e.g., alkyleneoxy, alkylenedioxy, alkyleneamino, alkylenediamino, and the like). Still further, for alkylene and heteroalkylene linking groups, no orientation of the linking group is implied by the direction in which the formula of the linking group is written. For example, the formula -C(O)₂R'- represents both -C(O)₂R'- and -R'C(O)₂-.

The terms "cycloalkyl" and "heterocycloalkyl", by themselves or in combination with other terms, represent, unless otherwise stated, cyclic versions of "alkyl" and "heteroalkyl", respectively. Additionally, for heterocycloalkyl, a heteroatom can occupy the position at which the heterocycle is attached to the remainder of the molecule. Examples of cycloalkyl include, but are not limited to, cyclopentyl, cyclohexyl, 1-cyclohexenyl, 3-cyclohexenyl, cycloheptyl, and the like. Examples of heterocycloalkyl include, but are not limited to, 1 -(1,2,5,6-tetrahydropyridyl), 1-piperidinyl, 2-piperidinyl, 3-piperidinyl, 4-morpholinyl, 3-morpholinyl, tetrahydrofuran-2-yl, tetrahydrofuran-3-yl, tetrahydrothien-2-yl, tetrahydrothien-3-yl, 1 -piperazinyl, 2-piperazinyl, and the like.

The terms "halo" or "halogen," by themselves or as part of another substituent, mean, unless otherwise stated, a fluorine, chlorine, bromine, or iodine atom. Additionally, terms such as "haloalkyl," are meant to include monohaloalkyl and polyhaloalkyl. For example, the term "halo(C₁-C₄)alkyl" is mean to include, but not be limited to, trifluoromethyl, 2,2,2-trifluoroethyl, 4-chlorobutyl, 3-bromopropyl, and the like.

The term "aryl" means, unless otherwise stated, a polyunsaturated, aromatic, hydrocarbon substituent which can be a single ring or multiple rings (preferably from 1 to 3 rings) which are fused together or linked covalently. The term "heteroaryl" refers to aryl groups (or rings) that contain from one to four heteroatoms selected from N, O, and S, wherein the nitrogen and sulfur atoms are optionally oxidized, and the nitrogen atom(s) are optionally quaternized. A heteroaryl group can be attached to the remainder of the molecule through a heteroatom. Non-limiting examples of aryl and heteroaryl groups include phenyl, 1-naphthyl, 2-naphthyl, 4-biphenyl, 1-pyrrolyl, 2-pyrrolyl, 3-pyrrolyl, 3-pyrazolyl, 2-imidazolyl, 4-imidazolyl, pyrazinyl, 2-oxazolyl, 4-oxazolyl, 2-phenyl-4-oxazolyl, 5-oxazolyl, 3-isoxazolyl, 4-isoxazolyl, 5-isoxazolyl, 2-thiazolyl, 4-thiazolyl, 5-thiazolyl, 2-furyl, 3-furyl, 2-thienyl, 3-thienyl, 2-pyridyl, 3-pyridyl, 4-pyridyl, 2-pyrimidyl, 4-pyrimidyl, 5-benzothiazolyl, purinyl, 2-benzimidazolyl, 5-indolyl, 1-isoquinolyl, 5-isoquinolyl, 2-quinoxalinyl, 5-quinoxalinyl, 3-quinolyl, and 6-quinolyl. Substituents for each of the above noted aryl and heteroaryl ring systems are selected from the group of acceptable substituents described below.

For brevity, the term "aryl" when used in combination with other terms (e.g., aryloxy, arylthioxy, arylalkyl) includes both aryl and heteroaryl rings as defined above. Thus, the term "arylalkyl" is meant to include those radicals in which an aryl group is attached to an alkyl group (e.g., benzyl, phenethyl, pyridylmethyl and the like) including those alkyl groups in which a carbon atom (e.g., a methylene group) has been replaced by, for example, an oxygen atom (*e*.*g*., phenoxymethyl, 2-pyridyloxymethyl, 3-(1-naphthyloxy)propyl, and the like).

Each of the above terms (*e*.*g*., "alkyl," "heteroalkyl," "aryl" and "heteroaryl") include both substituted and unsubstituted forms of the indicated radical. Preferred substituents for each type of radical are provided below.

Substituents for the alkyl, and heteroalkyl radicals (including those groups often referred to as alkylene, alkenyl, heteroalkylene, heteroalkenyl, alkynyl, cycloalkyl, heterocycloalkyl, cycloalkenyl, and heterocycloalkenyl) are generally referred to as "alkyl substituents" and "heteroakyl substituents," respectively, and they can be one or more of a variety of groups selected from, but not limited to: -OR', =O, =NR', =N-OR', -NR'R", -SR', -halogen, -SiR'R"R"', -OC(O)R', -C(O)R', -CO₂R', -CONR'R", -OC(O)NR'R", - NR"C(O)R', -NR'-C(O)NR"R"', -NR"C(O)₂R', -NR-C(NR'R"R'")=NR"", -NR-C(NR'R")=NR"', -S(O)R', -S(O)₂R', -S(O)₂NR'R", -NRSO₂R', -CN and -NO₂ in a number ranging from zero to (2m'+1), where m' is the total number of carbon atoms in such radical. R', R", R"' and R"" each preferably independently refer to hydrogen, substituted or unsubstituted heteroalkyl, substituted or unsubstituted aryl, e.g., aryl substituted with 1-3 halogens, substituted or unsubstituted alkyl, alkoxy or thioalkoxy groups, or arylalkyl groups. When a compound of the invention includes more than one R group, for example, each of the R groups is independently selected as are each R', R", R"' and R"" groups when more than one of these groups is present. When R' and R" are attached to the same nitrogen atom, they can be combined with the nitrogen atom to form a 5-, 6-, or 7-membered ring. For example, - NR'R" is meant to include, but not be limited to, 1-pyrrolidinyl and 4-morpholinyl. From the above discussion of substituents, one of skill in the art will understand that the term "alkyl" is meant to include groups including carbon atoms bound to groups other than hydrogen groups, such as haloalkyl (*e*.*g*., -CF₃ and -CH₂CF₃) and acyl *(e.g.,* -C(O)CH₃, -C(O)CF₃, - C(O)CH₂OCH₃, and the like).

Similar to the substituents described for the alkyl radical, the aryl substituents and heteroaryl substituents are generally referred to as "aryl substituents" and "heteroaryl substituents," respectively and are varied and selected from, for example: halogen, -OR', =O, =NR', =N-OR', -NR'R", -SR', -halogen, -SiR'R"R"', -OC(O)R', -C(O)R', -CO₂R', - CONR'R", -OC(O)NR'R", -NR"C(O)R', -NR'-C(O)NR"R"', -NR"C(O)₂R', -NR-C(NR'R")=NR"', -S(O)R', -S(O)₂R', -S(O)₂NR'R", -NRSO₂R', -CN and -NO₂, -R', - N₃, -CH(Ph)₂, fluoro(C₁-C₄)alkoxy, and fluoro(C₁-C₄)alkyl, in a number ranging from zero to the total number of open valences on the aromatic ring system; and where R', R", R"' and R"" are preferably independently selected from hydrogen, (C₁-C₈)alkyl and heteroalkyl, unsubstituted aryl and heteroaryl, (unsubstituted aryl)-(C₁-C₄)alkyl, and (unsubstituted aryl)oxy-(C₁-C₄)alkyl. When a compound of the invention includes more than one R group, for example, each of the R groups is independently selected as are each R', R", R"' and R"" groups when more than one of these groups is present.

Two of the aryl substituents on adjacent atoms of the aryl or heteroaryl ring may optionally be replaced with a substituent of the formula -T-C(O)-(CRR')_{q}-U-, wherein T and U are independently -NR-, -O-, -CRR'- or a single bond, and q is an integer of from 0 to 3. Alternatively, two of the substituents on adjacent atoms of the aryl or heteroaryl ring may optionally be replaced with a substituent of the formula -A-(CH₂)ᵣ-B-, wherein A and B are independently -CRR'-, -O-, -NR-, -S-, -S(O)-, -S(O)₂-, -S(O)₂NR'- or a single bond, and r is an integer of from 1 to 4. One of the single bonds of the new ring so formed may optionally be replaced with a double bond. Alternatively, two of the substituents on adjacent atoms of the aryl or heteroaryl ring may optionally be replaced with a substituent of the formula - (CRR')ₛ-X-(CR"R''')_{d}-, where s and d are independently integers of from 0 to 3, and X is -O-, -NR'-, -S-, -S(O)-, -S(O)₂-, or -S(O)₂NR'-. The substituents R, R', R" and R'" are preferably independently selected from hydrogen or substituted or unsubstituted (C₁-C₆)alkyl.

As used herein, the term "heteroatom" includes oxygen (O), nitrogen (N), sulfur (S) and silicon (Si).

### I. B. Introduction

This invention provides fertilizer compositions, methods of making these compositions, and methods of using these compositions.

### II. Fertilizer Concentrate

The present invention provides fertilizer concentrate compositions. The fertilizer concentrate comprises calcium phosphite in an amount of about 0.125 kg of calcium/kg of fertilizer or greater. The fertilizer concentrate compositions can be provided in liquid or solid form. These compositions can further comprise organic acids, sulfur compounds, thickeners, humectants, antimicrobials, surfactants, pesticides, herbicides, plant growth regulators, boron compounds, and diluents.

### II. A. Calcium Phosphite

Calcium phosphite (CaHPO₃) is used in the invention to supply calcium and phosphorus to the plant. The use of phosphite as the counterion in the calcium salt confers several advantages.

First, calcium phosphite has the advantage of being slightly soluble in water. A slightly soluble salt is less likely to be carried away from the plant's roots and/or leaves after application. This increased access to the major intake routes of the plant translates into increased absorption by the plant. The formulation described herein acts as a slow release fertilizer, with the ability to re-absorb moisture and continue to unload Calcium and Phosphorus through the leaves.

Second, unlike many counterions such as sulfate and phosphate, phosphite can be readily absorbed by the leaves. Because of this, calcium phosphite is an excellent fertilizer material for use in foliar applications.

Third, unlike phosphates, phosphite has greater soil solubility and is not immobilized rapidly in the soil. As such, phosphite readily moves to the roots and is absorbed by the plant. Because of this (coupled with insolubility), calcium phosphite is an excellent stable, slow release fertilizer material for use in soil and plant applications.

In an exemplary embodiment, the fertilizer concentrate comprises calcium phosphite. The amount of calcium phosphite used in the fertilizer concentrate is about 0.125 kg of calcium phosphite/kg of concentrate or greater. In another exemplary embodiment, the amount of calcium phosphite used in the fertilizer concentrate is between about 0.125 kg/kg to about 1 kg/kg. In yet another exemplary embodiment, the amount of calcium phosphite used in the fertilizer concentrate is between about 0.125 kg/kg to about 0.85 kg/kg. In yet another exemplary embodiment, the amount of calcium phosphite used in the fertilizer concentrate is between about 0.125 kg/kg to about 0.5 kg/kg. In another exemplary embodiment, the amount of calcium phosphite used in the fertilizer concentrate is between about 0.125 kg/kg to about 0.25 kg/kg. In another exemplary embodiment, the amount of calcium phosphite used in the fertilizer concentrate is between about 0.125 kg/kg to about 0.85 kg/kg. In still another exemplary embodiment, the amount of calcium phosphite used in the fertilizer concentrate is between about 0.3 kg/kg to about 0.6 kg/kg. In yet another exemplary embodiment, the amount of calcium phosphite used in the fertilizer concentrate is between about 0.15 kg/kg to about 0.5 kg/kg. In yet another exemplary embodiment, a calcium compound in addition to calcium phosphite is present in the fertilizer concentrate. In an exemplary embodiment, the calcium compound is a member selected from calcium chloride and calcium nitrate.

In an exemplary embodiment, the composition is a suspension of calcium phosphite. The suspension can be either an aqueous suspension or a non-aqueous suspension.

### II. B. Phosphorus-containing acid and deprotonating bases

Phosphorus-containing acids can be used in the fertilizer concentrate. Examples of phosphorus-containing acids include phosphoric acid, phosphorous acid, hypophosphorous acid, polyphosphorous acid, polyhypophosphorous acid, and combinations thereof. Phosphorus-containing acids can be useful in the invention as they maintain the buffering capacity of the solution. In addition, deprotonating bases can be also be utilized in the invention in order to maintain the buffering capacity of the solution. Examples of deprotonating bases include potassium hydroxide, calcium hydroxide, sodium hydroxide, and ammonium hydroxide.

In an exemplary embodiment, the amount of phosphorus-containing acids used in the fertilizer concentrate is about 0.008 kg/kg or greater. In another exemplary embodiment, the amount of phosphorus-containing acids used in the fertilizer concentrate is between about 0.008 kg/kg to about 0.3 kg/kg. In yet another exemplary embodiment, the amount of phosphorus-containing acids used in the fertilizer concentrate is between about 0.01 kg/kg to about 0.1 kg/kg. In yet another exemplary embodiment, the amount of phosphorus-containing acids used in the fertilizer concentrate is between about 0.1 kg/kg to about 0.3 kg/kg. In yet another exemplary embodiment, the amount of phosphorus-containing acids used in the fertilizer concentrate is between about 0.1 kg/kg to about 0.3 kg/kg. In yet another exemplary embodiment, the amount of phosphorus-containing acids used in the fertilizer concentrate is between about 0.05 kg/kg to about 0.2 kg/kg.

In an exemplary embodiment, the amount of the inorganic base used in the fertilizer concentrate is between about 0.008 kg/kg to about 0.2 kg/kg. In yet another exemplary embodiment, the amount of the inorganic base used in the fertilizer concentrate is between about 0.01 kg/kg to about 0.1 kg/kg. In yet another exemplary embodiment, the amount of the inorganic base used in the fertilizer concentrate is between about 0.1 kg/kg to about 0.2 kg/kg. In yet another exemplary embodiment, the amount of the inorganic base used in the fertilizer concentrate is between about 0.05 kg/kg to about 0.15 kg/kg. In yet another exemplary embodiment, the amount of the inorganic base used in the fertilizer concentrate is between about 0.05 kg/kg to about 0.2 kg/kg.

### II. C. Organic acids

Organic acids can be useful in the invention in several ways. First, organic acids can increase the solubility of calcium phosphite in the fertilizer compositions. Second, organic acids can act as anti-oxidants and slow the oxidation of phosphite to phosphate which can occur due to abiotic and biotic factors such as temperature, sunlight, aeration, and chemical oxidants in the spray tank. Organic acids of use in the invention include monocarboxylic acids, dicarboxylic acids, tricarboxylic acids and higher molecular weight carboxylic acids such as polymalic acid. Other organic acids of use in the invention include amino acids (such as aspartic acid, glutamic acid, serine threonine and cysteine), and fatty acids (including both saturated acids such as lauric, myristic, stearic, and arachidic acids, as well as unsaturated acids such as oleic, linoleic, cinnamic, linolenis, eleostearic, and arachidonic acids). Additional examples of organic acids include phenol and toluene sulfonic acid. Carboxylic acids of the invention contain substituted or unsubstituted alkyl, substituted or unsubstituted cycloalkyl, substituted or unsubstituted heteroalkyl, substituted or unsubstituted heterocycloalkyl, substituted or unsubstituted aryl, and substituted or unsubstituted heteroaryl moieties. Monocarboxylic acids which can be used in the fertilizer concentrate include methanoic (formic) acid, ethanoic (acetic) acid, propanoic (propionic) acid, and butanoic (butyric) acid. Dicarboxylic acids which can be used in the fertilizer concentrate include ethanedioic (oxalic) acid, propanedioic (malonic) acid, butanedioic (succinic) acid, pentanedioic (glutaric) acid, hexanedioic (adipic) acid, heptanedioic (pimelic) acid, *cis*-2-butenedioic (malic) acid, *trans*-2-butenedioic (fumaric) acid, benzene-1,2 dicarboxylic (phthalic) acid, benzene-1,3 dicarboxylic (isophthalic) acid, and benzene-1,4 dicarboxylic (terephthalic) acid, tartaric acid, and 2,3 dihydroxylated succinic acid. Tricarboxylic acids which can be used in the fertilizer concentrate include citric acid as well as α-keto acids.

In an exemplary embodiment, the organic acid used in the fertilizer concentrate is citric acid. In another exemplary embodiment, the organic acid used is maleic acid. In yet another exemplary embodiment, more than one organic acid is used.

In an exemplary embodiment, the amount of organic acid used in the fertilizer concentrate is between about 0.005 kg/kg to about 0.2 kg/kg. In another exemplary embodiment, the amount of organic acid used in the fertilizer concentrate is between about 0.005 kg/kg to about 0.05 kg/kg. In yet another exemplary embodiment, the amount of organic acid used in the fertilizer concentrate is between about 0.01 kg/kg to about 0.2 kg/kg. In yet another exemplary embodiment, the amount of organic acid used in the fertilizer concentrate is between about 0.01 kg/kg to about 0.1 kg/kg. In yet another exemplary embodiment, the amount of organic acid used in the fertilizer concentrate is between about 0.1 kg/kg to about 0.2 kg/kg. In yet another exemplary embodiment, the amount of organic acid used in the fertilizer concentrate is between about 0.05 kg/kg to about 0.15 kg/kg.

In another exemplary embodiment, the invention is a multiple buffered calcium and phosphorus containing fertilizer concentrate. This fertilizer concentrate can comprise a first buffer system comprising a phosphorous acid and a salt of a phosphorous acid and a second buffer system comprising an organic acid and a salt of an organic acid. The organic acid in this fertilizer concentrate is present in an amount of about 0.02 kg/kg or greater. In another exemplary embodiment, the fertilizer concentrate comprises two buffering systems. In yet another exemplary embodiment, when the fertilizer concentrate is diluted with water, there is formed a ready-to-use fertilizer having a foliage-acceptable pH for calcium and phosphorus uptake.

### II. D. Sulfur Compounds

In another aspect of the invention, the fertilizer composition further comprises a sulfur compound. Sulfur compounds are advantageous both as nutrients and, in some forms, as adjuvants for calcium uptake. As a macro nutrient, sulfur is an important constituent in protein structure, as well as in nitrogen metabolism. In addition, sulfur compounds are effective in complexing calcium in solution, thus enabling its more rapid uptake in plants.

In an exemplary embodiment, the sulfur compound is a member selected from sulfates, sulfides, sulfites, and organosulfur. In another exemplary embodiment, the sulfur compound is a sulfone. In yet another exemplary embodiment, the sulfur compound is dimethyl sulfone. In yet another exemplary embodiment, the sulfur compound is a sulfoxide.

In an exemplary embodiment, the amount of the sulfur compound used in the fertilizer concentrate is between about 0.005 kg/kg to about 0.2 kg/kg. In another exemplary embodiment, the amount of the sulfur compound used in the fertilizer concentrate is between about 0.005 kg/kg to about 0.05 kg/kg. In yet another exemplary embodiment, the amount of the sulfur compound used in the fertilizer concentrate is between about 0.01 kg/kg to about 0.2 kg/kg. In yet another exemplary embodiment, the amount of the sulfur compound used in the fertilizer concentrate is between about 0.01 kg/kg to about 0.1 kg/kg. In yet another exemplary embodiment, the amount of the sulfur compound used in the fertilizer concentrate is between about 0.1 kg/kg to about 0.2 kg/kg. In yet another exemplary embodiment, the amount of the sulfur compound used in the fertilizer concentrate is between about 0.05 kg/kg to about 0.15 kg/kg.

### II. E. Thickener/Suspending Agent/Stabilizing Agent/Viscosity-Increasing Agent/Binding Agent

In another aspect of the invention, the fertilizer composition further comprises a thickener. Thickeners can provide the benefits of controlling solution viscosity as well as enabling higher concentrations of the calcium salt to be maintained in a suspension.

In an exemplary embodiment, the thickener is a polymeric deposition agent. Examples of these include, but are not limited to, cellulose, starch, polyarcylamides or their copolymers or derivatives, polymers and copolymers of acrylic acid and methacrylic acid or their salts, polymethacrylamides or their copolymers or derivatives, polyacrylonitriles, their hydrolysis products, copolymers, polyvinyl polymers, copolymers, or derivatives.

In another exemplary embodiment, the thickener is a natural gum. Examples of these include, but are not limited to, gums, such as (arabic, acacia, furcelleran, tragacanth, ghatti, guar, karaya, locust bean, and xanthum. These gums can be incorporated in their derivatized, non-derivatized, cationic, and non-cationic versions.

In another exemplary embodiment, the thickener is an oil or oil substitute. Examples of these include, but are not limited to, alkylated fatty acid esters, alkylated natural oils, hydrocarbon oils, and fatty acids.

Alkylated fatty acid esters include, but are not limited to, methylated fatty acids, ethylated fatty acids, and butylated fatty acids. Methylated fatty acids include, but are not limited to, methylated C₆₋₁₉ fatty acids, methylated tall oil fatty acids, methylated oleic acid, methylated linoleic acid, methylated linolenic acid, methylated stearic acid, methylated palmitic acid, and blends thereof. Ethylated fatty acids include, but are not limited to, ethylated C₆₋₁₉ fatty acids, ethylated tall oil fatty acids, ethylated oleic acid, ethylated linoleic acid, ethylated linolenic acid, ethylated stearic acid, ethylated palmitic acid, and blends thereof. Butylated fatty acids include, but are not limited to, butylated C₆₋₁₉ fatty acids, butylated tall oil fatty acids, butylated oleic acid, butylated linoleic acid butylated linolenic acid, butylated stearic acid, butylated palmitic acid, and blends thereof.

Alkylated natural oils include, but are not limited to, alkylated soybean oil, alkylated canola oil, alkylated coconut oil, and alkylated sunflower oil. Alkylated soybean oils include, but are not limited to, methylated soybean oil, ethylated soybean oil, butylated soybean oil, and blends thereof. Alkylated canola oil include, but are not limited to, methylated canola oil, ethylated canola oil, butylated canola oil, and blends thereof. Alkylated coconut oils include, but are not limited to, methylated coconut oil, ethylated coconut oil, butylated coconut oil, and blends thereof. Alkylated sunflower oil include, but are not limited to, methylated sunflower oil, ethylated sunflower oil, butylated sunflower oil, and blends thereof.

Hydrocarbon oils include, but are not limited to, mineral oils including, but not limited to, paraffinic mineral oils, naphthenic mineral oils, aromatic mineral oils, and blends thereof. Vegetable oils include, but are not limited to, soybean oil, canola oil, cottonseed oil, and blends thereof. Fatty acids include, but are not limited to, C₆-C₁₉ fatty acids, tall oil fatty acids, oleic acid, linoleic acid, linolenic acid, stearic acid, palmitic acid, and blends thereof. Epoxified seed oils, polybutenes, and silicon containing thickeners, such as precipitated silicas or precipitated silicates can also be used as thickeners in the invention.

The oil can contain at least one of the above oils or its equivalent. The oil can also be a blend of at least two oils. When an oil is used, a surfactant or emulsifier must also be used if the composition is intended for aqueous based sprays.

Additional examples of thickeners include carboxymethylcellulose, carrageenan, carbomer-940 A, carbomer-956, alginate (propylene glycol alginate), casein (sodium caseinate), gelatin, mannitol, and sorbitol.

In an exemplary embodiment, the amount of thickener used in the fertilizer concentrate is between about 0.0001 kg/kg to about 0.1 kg/kg. In another exemplary embodiment, the amount of thickener used in the fertilizer concentrate is between about 0.001 kg/kg to about 0.1 kg/kg. In yet another exemplary embodiment, the amount of thickener used in the fertilizer concentrate is between about 0.001 kg/kg to about 0.05 kg/kg. In yet another exemplary embodiment, the amount of thickener used in the fertilizer concentrate is between about 0.05 kg/kg to about 0.1 kg/kg. In yet another exemplary embodiment, the amount of thickener used in the fertilizer concentrate is between about 0.03 kg/kg to about 0.08 kg/kg.

### II. F. Humectants

In another aspect of the invention, the fertilizer composition further comprises a humectant. Humectants can provide the benefit of promoting retention and absorption of moisture in a fertilizer. Since humectants absorb water from the air, the addition of a humectant has the effect of preventing the fertilizer from drying out after application and also in rehydration, when the relative humidity goes up (such as at night) particularly in arid climates.

Examples of humectants of use in the invention include aliphatic polyhydric alcohols and sugar alcohols, and salts thereof, such as macrogol, propane diol, polyethylene glycol, diglycerol, propylene glycol, polypropylene glycol, butylene glycol, polybutylene glycol, dipropylene glycol, glycerin, glycerol, sorbitol, sodium pyrrolidone carboxylate, ethyl carbitol, D-xylitol, polysorbate 60, 65 or 80 and hyaluronic acid can also be incorporated into the invention.

In an exemplary embodiment, the amount of humectant used in the fertilizer concentrate is between about 0.0005 kg/kg to about 0.2 kg/kg. In another exemplary embodiment, the amount of humectant used in the fertilizer concentrate is between about 0.001 kg/kg to about 0.1 kg/kg. In yet another exemplary embodiment, the amount of humectant used in the fertilizer concentrate is between about 0.01 kg/kg to about 0.1 kg/kg. In yet another exemplary embodiment, the amount of humectant used in the fertilizer concentrate is between about 0.05 kg/kg to about 0.1 kg/kg. In yet another exemplary embodiment, the amount of humectant used in the fertilizer concentrate is between about 0.01 kg/kg to about 0.05 kg/kg. In yet another exemplary embodiment, the amount of humectant used in the fertilizer concentrate is between about 0.03 kg/kg to about 0.08 kg/kg.

### II. G. Antimicrobials

In another aspect of the invention, the fertilizer composition further comprises an antimicrobial. Antimicrobials are useful since they can retard the growth of microorganisms which may degrade a formulated product.

Examples of antimicrobial agents include quinolone carboxylic acids, nitrofurans, sulfonamides, benzoic acid derivatives, sulfites, oxyhalide comopunds, and metallic salts (such as silver, copper, and magnesium). Quinolone carboxylic acids include ciproflaxin, nalidixic acid, cinoxacin, norfloxacin, enoxacin, pefloxacin, iomefloxacin, fleroxacin, sparfloxacin, refloxacin, temafloxacin, amifloxacin, irloxacin and piromidic acid. Nitrofurans include furium, furazolidone, Z-furan, furylfuramide, nitrovin, furalazine, acetylfuratrizine, panfuran-S, nifuroxime, nitrofurazone, nifuraldezone, nihydrazone, nitrofurantoin, nifuratel, nitrofurathiazide, nifurtoinol, nifurtoinol. Sulfonamides include N-acylsulfanilamides, N-heterocyclic-N-acylsulfanilamides, and N-heterocyclic-N-acetylsulfanilamides.

Additional examples of antimicrobials include benzalkonium chloride, photosensitive element No. 201, a chlorhexidine gluconate solution, chloroxylenol, trichlorocarbanilide, halocarvan, mononitroguaiacol, cephalosporin, 1,2-benziisothiazoline-3-one.

In an exemplary embodiment, the amount of antimicrobial used in the fertilizer concentrate is between about 0.00005 kg/kg to about 0.1 kg/kg. In another exemplary embodiment, the amount of antimicrobial used in the fertilizer concentrate is between about 0.0005 kg/kg to about 0.05 kg/kg. In yet another exemplary embodiment, the amount of antimicrobial used in the fertilizer concentrate is between about 0.005 kg/kg to about 0.05 kg/kg. In yet another exemplary embodiment, the amount of antimicrobial used in the fertilizer concentrate is between about 0.0005 kg/kg to about 0.005 kg/kg. In yet another exemplary embodiment, the amount of antimicrobial used in the fertilizer concentrate is between about 0.005 kg/kg to about 0.05 kg/kg. In yet another exemplary embodiment, the amount of antimicrobial used in the fertilizer concentrate is between about 0.001 kg/kg to about 0.03 kg/kg.

### II. H. Wetting Agents/Surfactants/Detergents/Surfactants

In another aspect of the invention, the fertilizer composition further comprises a surfactant. Surfactants can reduce the surface tension of the fertilizer and thus improve the uptake of the fertilizer by the plant.

Examples of surfactants include polyoxyethylenesorbitan fatty acid esters, sorbitan fatty acid esters, polyoxyethylene fatty acid esters and glycerin fatty acid esters. Additional examples include sodiumlaurylsulfate, sodium laurylsarcoside, sodium monoglyceride, and sulfate ethionates of fatty acid. Other examples include saponins, amines (such as diethanolamine, triethanolamine, methyl diethanolamine), salts of fatty acids, silicone derivative, alkyl benzene sulfonates (ABS), linear alkyl benzene sulfonates (LAS), alkyl phenoxy polyethoxy ethanols (alcohol ethoxylates), alkyl ammonium chloride (Quaternium 15), alkyl glucosides and phosphate esters.

In an exemplary embodiment, the amount of surfactant used in the fertilizer concentrate is between about 0.0008 kg/kg to about 0.05 kg/kg. In another exemplary embodiment, the amount of surfactant used in the fertilizer concentrate is between about 0.01 kg/kg to about 0.05 kg/kg. In yet another exemplary embodiment, the amount of surfactant used in the fertilizer concentrate is between about 0.01 kg/kg to about 0.03 kg/kg. In yet another exemplary embodiment, the amount of surfactant used in the fertilizer concentrate is between about 0.02 kg/kg to about 0.05 kg/kg. In an exemplary embodiment, the surfactant is a phosphate ester. In another exemplary embodiment, the amount of phosphate ester in the fertilizer concentrate is between about 0.0008 kg/kg to about 0.1 kg/kg.

### II. I. Naphthalene condensate

In another aspect of the invention, the fertilizer compositions of the invention further comprise a naphthalene condensate. Examples of naphthalene condensates include naphthalenesulfonic acid-formaldyhyde polymers with a variety of alkali and alkaline earth metal counterions including sodium, potassium, calcium and magnesium.

In an exemplary embodiment, the amount of naphthalene condensate used in the fertilizer concentrate is between about 0.00005 kg/kg to about 0.1 kg/kg. In another exemplary embodiment, the amount of naphthalene condensate used in the fertilizer concentrate is between about 0.0005 kg/kg to about 0.05 kg/kg. In yet another exemplary embodiment, the amount of naphthalene condensate used in the fertilizer concentrate is between about 0.005 kg/kg to about 0.05 kg/kg. In yet another exemplary embodiment, the amount of naphthalene condensate used in the fertilizer concentrate is between about 0.0005 kg/kg to about 0.005 kg/kg. In yet another exemplary embodiment, the amount of naphthalene condensate used in the fertilizer concentrate is between about 0.005 kg/kg to about 0.05 kg/kg. In yet another exemplary embodiment, the amount of naphthalene condensate used in the fertilizer concentrate is between about 0.001 kg/kg to about 0.03 kg/kg.

### II. J. Pesticides

In another aspect of the invention, the fertilizer compositions of the invention further comprise a pesticide. Examples of pesticides include organophosphates, carbamates, insect growth regulators, and naturally derived insecticides. An example of a naturally derived insecticide include garlic oil.

In an exemplary embodiment, the amount of pesticide used in the fertilizer concentrate is between about 0.0008 kg/kg to about 0.7 kg/kg. In another exemplary embodiment, the amount of pesticide used in the fertilizer concentrate is between about 0.01 kg/kg to about 0.6 kg/kg. In yet another exemplary embodiment, the amount of pesticide used in the fertilizer concentrate is between about 0.05 kg/kg to about 0.3 kg/kg. In yet another exemplary embodiment, the amount of pesticide used in the fertilizer concentrate is between about 0.1 kg/kg to about 0.3 kg/kg. In yet another exemplary embodiment, the amount of pesticide used in the fertilizer concentrate is between about 0.3 kg/kg to about 0.6 kg/kg.

### II. K. Herbicides

In another aspect of the invention, the fertilizer composition of the invention further comprises a herbicide. Examples of herbicides include hormonal-based herbicides, pre-emergent herbicides, as well as post-emergent, or contact, herbicides. Examples of pre-emergent herbicides include sulfonyl ureas. Examples of post-emergent herbicides include glyphosate, paraquat, and 2,4 D.

In an exemplary embodiment, the amount of herbicide used in the fertilizer concentrate is between about 0.0008 kg/kg to about 0.7 kg/kg. In another exemplary embodiment, the amount of herbicide used in the fertilizer concentrate is between about 0.01 kg/kg to about 0.6 kg/kg. In yet another exemplary embodiment, the amount of herbicide used in the fertilizer concentrate is between about 0.05 kg/kg to about 0.3 kg/kg. In yet another exemplary embodiment, the amount of herbicide used in the fertilizer concentrate is between about 0.1 kg/kg to about 0.3 kg/kg. In yet another exemplary embodiment, the amount of herbicide used in the fertilizer concentrate is between about 0.3 kg/kg to about 0.6 kg/kg.

### II. L. Plant Growth Regulators/Hormones

In another aspect of the invention, the fertilizer composition of the invention further comprises a plant growth regulator. Plant growth regulators may be synthetic compounds (*e*.*g*., IBA and Cycocel) that mimic naturally occurring plant hormones, or they may be natural hormones that were extracted from plant tissue (e.g., IAA).

There are several groups of plant-growth-regulating compounds, including auxins, gibberellins (GA), cytokinins, ethylene, abscisic acid (ABA), brassinolides, and jasmonates. For the most part, each group contains both naturally occurring hormones and synthetic substances.

Auxin causes several responses in plants, primarily affecting cell elongation. These responses include phototropism (bending toward a light source), geotropism (downward root growth in response to gravity), promotion of apical dominance, flower formation, fruit set and growth, and the formation of adventitious roots. In practice, auxins are the active ingredient in most rooting compounds in which cuttings are dipped during vegetative propagation. Examples of auxins include indoleacetic acid (IAA) which is synthesized from tryptophan, as well as indolebutyric acid (IBA), as well as synthetic derivatives of auxins.

Gibberellins also cause several responses in plants, including stimulation of cell division and elongation, termination of seed dormancy, and acceleration of germination. They stimulate RNA to promote synthesis of enzymes that convert stored nutrients (starches) to sugars needed for rapid cell respiration during germination. Gibberellins often work with auxins to achieve their effects. Examples of gibberellins include gibberellic acids with carbon chains ranging in length from four to twelve carbons.

Cytokinins are a group of phenyl urea derivatives of adenine. Unlike other plant growth regulators, cytokinins are found in both plants and animals. They stimulate cytokinesis, or cell division, as well as delay aging and senescence. Examples of cytokinins include zeatin.

Ethylene is unique in that it is found only in the gaseous form. It induces ripening, causes leaves to droop (epinasty) and drop (abscission), and promotes senescence. Plants often increase ethylene production in response to stress, and ethylene often is found in high concentrations within cells at the end of a plant's life. Ethylene also is used to ripen fruit (e.g., green bananas).

Abscisic acid (ABA) is a general plant-growth inhibitor. It induces dormancy and prevents seeds from germinating; causes abscission of leaves, fruits, and flowers; and causes stomata to close. High concentrations of ABA in guard cells during periods of drought stress probably play a role in stomatal closure.

In an exemplary embodiment, the amount of plant growth regulator used in the fertilizer concentrate is between about 0.0005 kg/kg to about 0.2 kg/kg. In an exemplary embodiment, the amount of plant growth regulator used in the fertilizer concentrate is between about 0.0005 kg/kg to about 0.1 kg/kg. In another exemplary embodiment, the amount of plant growth regulator used in the fertilizer concentrate is between about 0.001 kg/kg to about 0.1 kg/kg. In yet another exemplary embodiment, the amount of plant growth regulator used in the fertilizer concentrate is between about 0.1 kg/kg to about 0.1 kg/kg. In yet another exemplary embodiment, the amount of plant growth regulator used in the fertilizer concentrate is between about 0.5 kg/kg to about 0.1 kg/kg. In yet another exemplary embodiment, the amount of plant growth regulator used in the fertilizer concentrate is between about 0.1 kg/kg to about 0.05 kg/kg. In yet another exemplary embodiment, the amount of plant growth regulator used in the fertilizer concentrate is between about 0.03 kg/kg to about 0.08 kg/kg.

### II. M. Boron Compounds

Though classified as a micronutrient, a lack of boron (B) in a plant diet will affect growth the same as a lack of a primary nutrient such as nitrogen. Boron regulates the transport of sugars through membranes, cell division, cell development, and auxin metabolism. Boron deficiency is often manifested with the failure to produce seeds or fruits. It is the most widespread of all micronutrient deficiencies in the Pacific Northwest. Examples of boron compounds useful in the invention include boric acid (H₃BO₃); borax or disodium borate decahydrate (Na₂B₄O₇·10H₂O); borated gypsum, or calcium sulfate dihydrate disodium borate (CaSO₄, 2 H₂O + Na₂B₄O₇); Fertilizer Borate 48, or disodium borate hexahydrate (Na₂B₄O₇·5H₂O); Fertilizer Borate 68, or disodium borate (Na₂B₄O₇); Solubor, or disodium borate hexahydrate and disodium borate decahydrate (Na₂B₄O₇·5H₂O + Na₂B₁₀O₁₆·10H₂O). Borax and borated gypsum are often used in solid compositions of boron fertilizers. Boric acid and disodium borate hexahydrate and disodium borate decahydrate can be used for either soil or foliar application.

In an exemplary embodiment, the amount of the boron compound used in the fertilizer concentrate is between about 0.0001 kg/kg to about 0.1 kg/kg. In another exemplary embodiment, the amount of the boron compound used in the fertilizer concentrate is between about 0.001 kg/kg to about 0.1 kg/kg. In yet another exemplary embodiment, the amount of the boron compound used in the fertilizer concentrate is between about 0.001 kg/kg to about 0.05 kg/kg. In yet another exemplary embodiment, the amount of the boron compound used in the fertilizer concentrate is between about 0.05 kg/kg to about 0.1 kg/kg. In yet another exemplary embodiment, the amount of the boron compound used in the fertilizer concentrate is between about 0.03 kg/kg to about 0.08 kg/kg.

### II. N. Plant Nutrient Compounds

In order to provide additional nutrients to the plant, the compositions of the invention can further comprise one or more additional plant nutrients. These can be primary nutrients, such as nitrogen or potassium. The plant nutrients can also be secondary nutrients such as magnesium and sodium. Finally the plant nutrients can also be micronutrients such as cobalt, copper, iron, manganese, molybdenum, and zinc.

### III. Ready-to-Use Fertilizers

The present invention also provides ready-to-use fertilizer compositions. A ready-to-use fertilizer comprises a fertilizer concentrate and a diluent. This ready-to-use fertilizer composition can be provided in either liquid or solid form. Since a ready-to-use fertilizer includes a fertilizer concentrate, the ready-to-use fertilizer also can include any of the components described above, such as organic acids, sulfur compounds, thickeners, humectants, antimicrobials, surfactants, pesticides, herbicides, plant growth regulators, boron compounds, and diluents.

### IV. Methods of Making the Compositions

The fertilizer concentrates and ready-to-use fertilizers of the invention are prepared by first forming a mixed suspension of calcium phosphite. A calcium phosphite suspension can be made either by adding calcium phosphite directly to a liquid, or by generating calcium phosphite *in situ* by adding a calcium-containing compound to a phosphite-containing compound in a liquid. Agents necessary for maintaining a suspension, such as, surfactants, humectants, thickeners, etc., can be added with constant stirring. Desired nutrients can also be added with constant stirring. The fertilizers of the invention can also be prepared as solid compositions, identical to the liquid ones by simply leaving out all of the water. The properties are the same as the liquid compositions but have the additional advantage of weighing less for the same amount of nutrient.

### V. Methods of Using the Compositions

The fertilizers of the invention are applied according to crop-specific recommendations which will depend upon the application method as well as whether they are applied to the soil or plant. There are several general fertilizer application methods for liquid based fertilizers. The first is application via the irrigation system which can be subdivided into micro, furrow and flood irrigation. To be suitable for irrigation purposes, a fertilizer concentrate will usually be diluted 500 to 10,000 fold. Fruit and vegetable crops are particularly suited for irrigation purposes. The second application method is ground-based, or conventional spraying. This method encompasses application via tractor mounted or powered sprayers, back pack sprayers and electrostatic sprayers. To be suitable for ground-based purposes, a fertilizer concentrate will usually be diluted 10 to 1,000 fold. Fruit and vegetable crops are also suited for ground-based application. The third application method is aerial spraying. To be suitable for aerial purposes, a fertilizer concentrate will usually be diluted 10 to 100 fold. Large acreage crops such as cereals, forage crops and crops grown on plantations, are suited for aerial application. A further fertilizer application method is tree injection, whereby the fertilizer is injected directly into the plant usually in the trunk, scaffold branches or crown roots. Fertilizer applications can also be divided into foliar application, soil application, time of application, rate of application, and product composition. Crops that will benefit from the fertilizers of the invention include, but are not limited to, avocado, citrus, mango, coffee, deciduous tree crops, grapes and other berry crops, soybean and other commercial beans, green vegetables, aliums, asparagus, artichokes, bananas, corn, tomato, cucurbits and cucumis species, lettuce (green vegetables), potato, sugar beets, peppers, sugarcane, hops, tobacco, pineapple, Tea, Coffee, Sisal, Cereals and grasses, Forage crops, Sugar and oil producing crops, Forestry, Pharmaceutical crops, Cotton, ferns, coconut palm and other commercial and ornamental palms, hevea rubber, forage plants and ornamental plants.

In addition to the foliar, soil, and irrigation application methods mentioned above, the present fertilizer may prove beneficial to certain crops through other application methods. For example, trunk paints or other methodologies may provide for a continuous low supply of fertilizers of the invention, such as, for example, "intravenous" feeding. More information can be found at http://www.extension.umn.edu/distribution/horticulture/DG7410.html. In another example, tree injection systems are also encompassed by the invention. In a tree injection system, fertilizer is injected into the trunk or the scaffold of the plant. Tree injection systems are particularly useful for palm trees and other soft stem plants, as well as for the production of bananas. More information on tree injection systems can be found at (http://www.na.fs.fed.us/spfo/pubs/misc/ded/ded.htm).

The invention includes methods of providing calcium and phosphorus to a plant. This method comprises mixing water with a fertilizer concentrate, thus forming a ready-to-use fertilizer, and applying this ready-to-use fertilizer to the foliage of a plant. In an exemplary embodiment, the fertilizer concentrate comprises calcium phosphite in an amount of about 0.125 kg of calcium phosphite/kg of fertilizer concentrate or greater. In another exemplary embodiment, the fertilizer concentrate can be a suspension. In another exemplary embodiment, the fertilizer concentrate can be a member selected from an aqueous suspension or a non-aqueous suspension.

The invention includes methods of promoting growth in a plant through foliar application of a ready-to-use fertilizer. This method comprises forming a ready-to-use fertilizer through adding water to a fertilizer concentrate, and applying this ready-to-use fertilizer to the foliage of a plant. In an exemplary embodiment, the fertilizer concentrate comprises calcium phosphite in an amount of about 0.125 kg of calcium phosphite/kg of fertilizer concentrate or greater. In another exemplary embodiment, the fertilizer concentrate can be a suspension. In another exemplary embodiment, the fertilizer concentrate can be a member selected from an aqueous suspension or a non-aqueous suspension.

The invention includes methods of providing calcium and phosphorus to a seed. This method comprises mixing water and a fertilizer concentrate, thus forming a ready-to-use fertilizer that has a seed-acceptable pH for calcium and phosphorus uptake, and applying this ready-to-use fertilizer to the seed. In an exemplary embodiment, the fertilizer concentrate comprises calcium phosphite in an amount of about 0.125 kg of calcium phosphite/kg of fertilizer concentrate or greater. In another exemplary embodiment, the fertilizer concentrate can be a suspension. In another exemplary embodiment, the fertilizer concentrate can be a member selected from an aqueous suspension or a non-aqueous suspension.

The invention includes methods of preventing the browning of leaves and/or fruit and/or storage organs. This method comprises applying a ready-to-use fertilizer to a plant in an amount sufficient to prevent the browning of its leaves and/or fruit and/or storage organs. In an exemplary embodiment, the ready-to-use fertilizer comprises a fertilizer concentrate and a diluent. In another exemplary embodiment, the fertilizer concentrate comprises calcium phosphite in an amount of about 0.125 kg of calcium phosphite/kg of fertilizer concentrate or greater. In another exemplary embodiment, the fertilizer concentrate can be a suspension. In another exemplary embodiment, the fertilizer concentrate can be a member selected from an aqueous suspension or a non-aqueous suspension.

The invention includes slow-release methods of providing phosphite to a plant. This method comprises applying a solid fertilizer concentrate or a solid ready-to-use fertilizer in an amount sufficient to provide phosphite to the plant. In an exemplary embodiment, the fertilizer concentrate comprises calcium phosphite in an amount of about 0.125 kg of calcium phosphite/kg of fertilizer concentrate or greater. In another exemplary embodiment, the fertilizer concentrate can be a suspension. In another exemplary embodiment, the fertilizer concentrate can be a member selected from an aqueous suspension or a non-aqueous suspension.

The invention includes methods of extending the shelf-life (i. e. "toughening up") of a plant. This method comprises applying a ready-to-use fertilizer to a plant at a time prior to crop harvest. The time prior to crop harvest can be between twelve hours and seven days. In an exemplary embodiment, the ready-to-use fertilizer comprises a fertilizer concentrate and a diluent. In another exemplary embodiment, the fertilizer concentrate comprises calcium phosphite in an amount of about 0.125 kg of calcium phosphite/kg of fertilizer concentrate or greater. In another exemplary embodiment, the fertilizer concentrate can be a suspension. In another exemplary embodiment, the fertilizer concentrate can be a member selected from an aqueous suspension or a non-aqueous suspension.

The invention includes methods of improving the post harvest condition of produce. This method comprises application of a fertilizer of the invention to a plant at a time after crop harvest. This application can take place at a variety of locations, such as in the field immediately after crop harvest, or in a fruit or vegetable packhouse. In an exemplary embodiment, the fertilizer of the invention comprises a fertilizer concentrate. In another exemplary embodiment, the fertilizer concentrate comprises calcium phosphite in an amount of about 0.125 kg of calcium phosphite/kg of fertilizer concentrate or greater. In another exemplary embodiment, the fertilizer concentrate can be a suspension. In another exemplary embodiment, the fertilizer concentrate can be a member selected from an aqueous suspension or a non-aqueous suspension.

The invention includes methods of reducing the amount of nitrogen in a tissue of a plant. This method comprises applying a fertilizer of the invention to a plant at a time prior to crop harvest. The time prior to crop harvest can be between twelve hours and fifty days. In another exemplary embodiment, the time prior to crop harvest can be between twelve hours and ten days. In an exemplary embodiment, the fertilizer of the invention comprises a fertilizer concentrate. In another exemplary embodiment, the fertilizer concentrate comprises calcium phosphite in an amount of about 0.125 kg of calcium phosphite/kg of fertilizer concentrate or greater. In another exemplary embodiment, the fertilizer concentrate can be a suspension. In another exemplary embodiment, the fertilizer concentrate can be a member selected from an aqueous suspension or a non-aqueous suspension.

The invention includes methods of increasing the amount of calcium absorbed through the roots of a plant. This method comprises applying a fertilizer of the invention either directly to the roots of a plant, or in the soil surrounding the plant, at a time prior to crop harvest. In an exemplary embodiment, the fertilizer of the invention comprises a fertilizer concentrate. In another exemplary embodiment, the fertilizer concentrate comprises calcium phosphite in an amount of about 0.125 kg of calcium phosphite/kg of fertilizer concentrate or greater. In another exemplary embodiment, the fertilizer concentrate can be a suspension. In another exemplary embodiment, the fertilizer concentrate can be a member selected from an aqueous suspension or a non-aqueous suspension.

In order that the invention described herein may be more fully understood, the following examples are set forth. All chemicals used were of analytical reagent quality and approximately 100% by weight unless otherwise specified. All compositions are expressed in terms of weight of calcium phosphite to weight of fertilizer unless otherwise specified. It should be understood that these examples are for illustrative purposes only and are not to be construed as limiting the scope of the invention in any manner.

### EXAMPLES

The following examples are provided to illustrate, but not to limit, the compositions and methods of the claimed invention. In each of the field test protocols, the ready-to-use fertilizers were diluted with water and comprised 2% fertilizer concentrate. The field test protocols were tested against the grower's standard protocol. The grower's standard protocol lacked the application of the ready-to-use fertilizers described in the Examples. However, all other fertilizers and conditions utilized in the field test protocols were applied in the grower's standard protocol. All fertilizers were in liquid format and were applied to the plants via a back pack sprayer.

In the lettuce and celery field tests, plants were grown in sandy loam soils in Salinas California. All plants were irrigated and managed according to standard lettuce and celery commercial cultivation practices in the region. Greenhouse tests, for bell peppers for instance, were conducted in Visalia, California, in thermostatically controlled greenhouses.

### EXAMPLE 1

### Calcium Phosphite Fertilizer

A one liter fertilizer concentrate was prepared with an NPK analysis of 0-15-5, 7% Ca and 1.5% S. It was packaged in a one-container system where 1 liter contained (all amounts are kg/kg): 0.5515 of water; 0.02 of a naphthalenesulfonic acid, polymer with formaldehyde, sodium salt [CAS 9084-06-4]; 0.05 of hydroxysuccinic acid; 0.03 of 2-hydroxy-1,2,3-propanetricarboxylic acid; 0.047 of dimethyl sulfone; 0.21 of calcium phosphite; 0.07 of potassium hydroxide; 0.001 ofxanthan gum; 0.01 of glycerine; 0.0005 of 1,2-benzisothiazolin-3-one, or Proxel; and 0.01 of phosphorous acid. This fertilizer concentrate was assembled according to the methods described in Section III of this application, and had a pH of between 6.0 and 9.0.

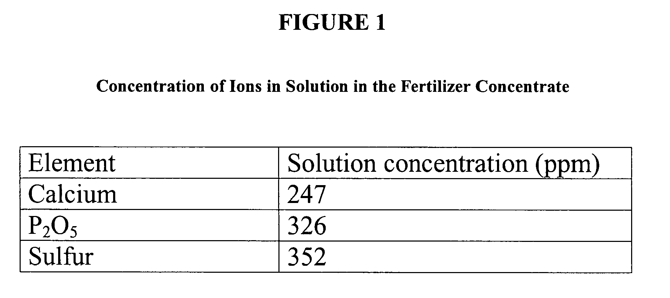

The fertilizer concentrate was an aqueous suspension with small amounts of calcium and other salts in solution. A table detailing several ion concentrations in the fertilizer concentrate is provided in **FIG. 1.** As described in **FIG. 1,** calcium was only present in solution at a concentration of 247 ppm. This represented only 0.3% of the total amount of calcium in the fertilizer concentrate. The concentrate was 99.7% in a suspension form.

### EXAMPLE 2

### Plant Tissue Analysis Report: Romaine Lettuce

The ability of various ready-to-use fertilizers to provide calcium to romaine lettuce plants was tested. Plant tissue testing methods are known to those of skill in the art, as described in books such as *Soil Testing and Plant Analysis, Third Edition,* Jones and Case, ed., p. 389-427, Soil Science Society of America, 1990, which is herein incorporated by reference. These romaine lettuce plants were grown by American Farms in a study undertaken by Denele Agricultural (Denele Agricultural, 1232 South Ave., Turlock, CA 95380). Romaine lettuce was planted in eight plots of land. Growing conditions on each plot of land were identical, except for the addition of one of fertilizer concentrates A-H.

The percentages of calcium in each of fertilizer concentrates A-H are as follows. Fertilizer concentrate A contains 5.0 % Ca derived from calcium carbonate, citric acid and glycine. Fertilizer concentrate B is the fertilizer composition described in Example 1. Fertilizer concentrate C contains 2.0 % Ca derived from calcium carbonate, citric acid and glycine. Fertilizer concentrate D contains 10.0 % Ca derived from calcium nitrate and calcium ammonium nitrate. Fertilizer concentrate E contains 10.0 % Ca derived from nitric acid and calcium acetate. Fertilizer concentrate F contains 5.0 % Ca as calcium citrate. Fertilizer concentrate G contains 12.1 % Ca derived from calcium chloride. Fertilizer concentrate H contains 9.5 % Ca derived from calcium acetate, calcium gluconate, calcium chloride, and calcium nitrate.

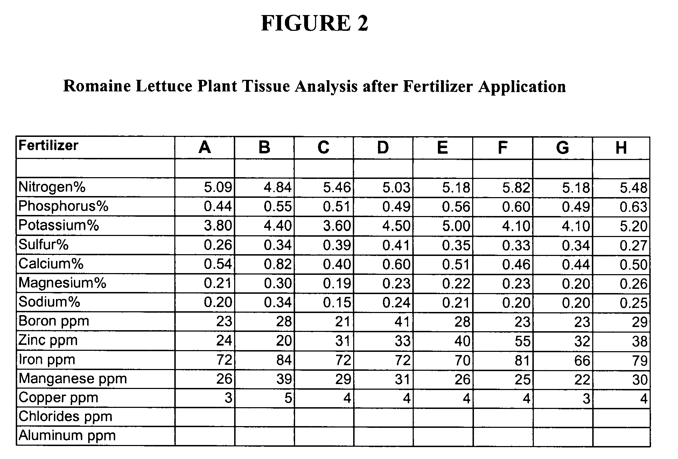

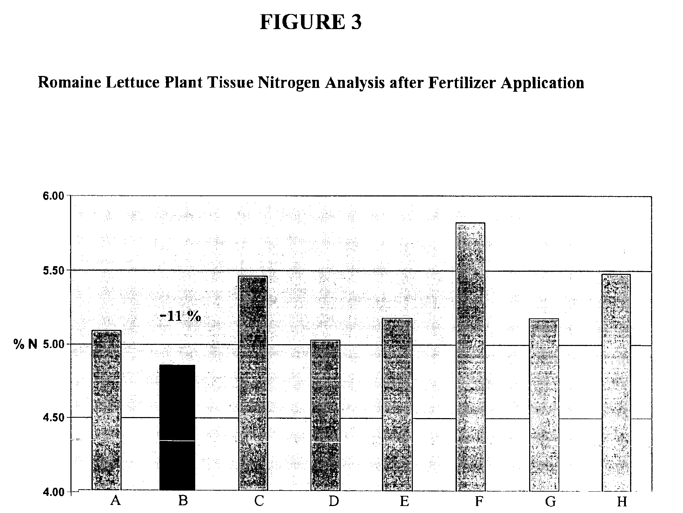

The romaine lettuce plant samples from each plot were collected four days after fertilizer application. The romaine lettuce plants were at rossette stage, or prior to heading, when collected. After collection, the romaine lettuce plant tissues were analyzed for the percentages of various nutrients taken up by the romaine lettuce plant. These findings are provided in **FIG. 2.** A graph which displays only the nitrogen data from these field tests is provided in **FIG. 3.**

As shown by **FIG. 2**, the highest amount of calcium in the plant tissues tested is contained in the romaine lettuce plant tissues treated with the fertilizer of the invention, Fertilizer concentrate B. The calcium amount, 0.82%, is 36% higher than the amount in Fertilizer concentrate D, the next highest amount.

As shown by **FIG. 3,** the lowest amount of nitrogen in the plant tissues tested is contained in the romaine lettuce plant tissues treated with the fertilizer of the invention, Fertilizer concentrate B. The nitrogen amount, 4.84%, is 4-16% lower than the other treatments.

### EXAMPLE 3

### Plant Tissue Analysis Report: Lettuce

The ability of various ready-to-use fertilizers to provide calcium to leaf lettuce plants was tested. These lettuce plants were grown by American Farms in a study undertaken in the Salinas valley by Denele Agricultural (Denele Agricultural, 1232 South Ave., Turlock, CA 95380). Lettuce was planted in eight plots of land. Growing conditions on each plot of land was identical, except for the addition of one of fertilizer concentrates A-H. The percentages of calcium in each of fertilizers A-H is described in Example 2.

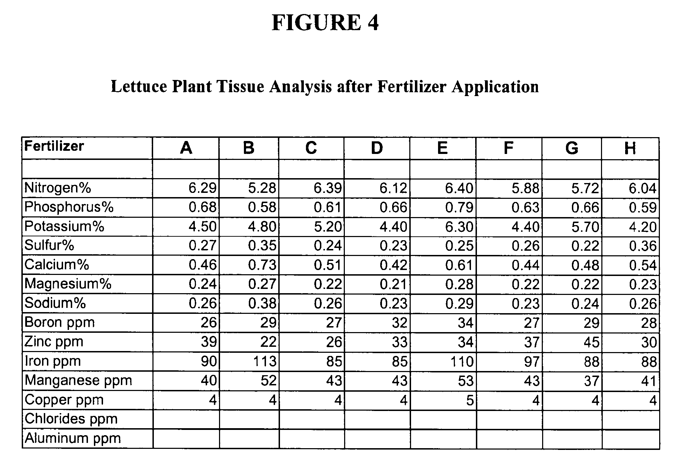

The lettuce plant samples from each plot were collected four days after fertilizer application. The lettuce plants were at rossette stage, or prior to heading, when collected. After collection, the lettuce plant tissues were analyzed for the percentages of various nutrients taken up by the lettuce plant. These findings are provided in **FIG. 4.** Calcium was one of the nutrients tested, and the plants that were provided with Fertilizer concentrate B had the highest percentage of calcium in their tissues.

As shown by **FIG. 4,** the highest amount of calcium in the plant tissues tested is contained in the lettuce plant tissues treated with the fertilizer of the invention, Fertilizer concentrate B. The calcium amount, 0.73%, is 19% higher than the amount in Fertilizer concentrate E, the next highest amount.

As shown by **FIG.4,** the lowest amount of nitrogen in the plant tissues tested is contained in the lettuce plant tissues treated with the fertilizer of the invention, fertilizer concentrate B. The nitrogen amount, 5.28%, is 8-18% lower than the other treatments.

### EXAMPLE 4

### Plant Tissue Analysis Report: Celery

The ability of the ready-to-use fertilizer of the invention to provide calcium to celery leaves was tested. These celery plants were grown by American Farms in a study undertaken in the Salinas valley by Denele Agricultural (Denele Agricultural, 1232 South Ave., Turlock, CA 95380). Celery was planted in two plots of land. Growing conditions on each plot of land was identical, except for the addition of either Fertilizer concentrate B or C. The percentages of calcium in Fertilizer concentrates B and C are described in Example 2.

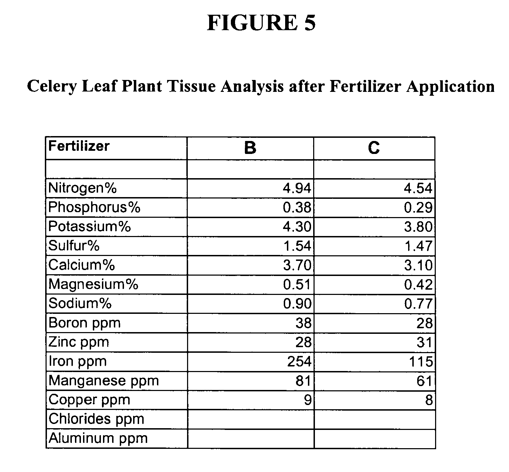

The celery leaf plant samples from each plot were collected four days after fertilizer application. After collection, the celery leaf tissues were analyzed for the percentages of various nutrients taken up by the celery plant. These findings are provided in FIG. 5. Calcium was one of the nutrients tested, and the plants that were provided with Fertilizer concentrate B had a 19% higher percentage of calcium, a 31 % increase in phosphorus and a 5% increase in sulfur in their tissues than those plants which received Fertilizer concentrate C.

### EXAMPLE 5

### Plant Tissue Analysis Report: Potatoes

The ability of the ready-to-use fertilizers of the invention to provide calcium to potato plants was tested. These potato plants were grown by American Farms in Santa Maria, in a study undertaken by Denele Agricultural (Denele Agricultural, 1232 South Ave., Turlock, CA 95380). Potatoes were planted in two plots of land. Growing conditions on each plot of land was identical, except for the addition of either Fertilizer concentrate B or C. The percentages of calcium in Fertilizer concentrates B and C are described in Example 2.

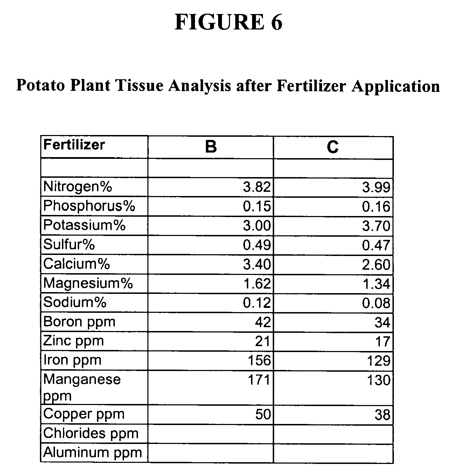

The potato plant samples from each plot were collected four days after fertilizer application. After collection, the potato plant tissues were analyzed for the percentages of various nutrients taken up by the potato plant. These findings are provided in **FIG. 6.** Calcium was one of the nutrients tested, and the plants that were provided with Fertilizer concentrate B had a 30% higher percentage of calcium in their tissues than those plants which received Fertilizer concentrate C.

### EXAMPLE 6

### Harvest Yield: Table Grapes

The ability of the fertilizer of the invention to increase the yield in table grapes was tested. The study was undertaken by Sawtooth Agriculture Inc. of Woodlake, California. A ready-to-use fertilizer comprising 1.5% fertilizer concentrate of Example 1 was applied to table grapes one week prior to bloom (var. ruby seedless) at a site in Cutler, California. The ready-to-use fertilizer was compared not only to a grower standard, but also to a foliar fertilizer ("PKS"). PKS had a NPK analysis of 5-20-15 and was identical to the ready-to-use fertilizer except for a lack of calcium.

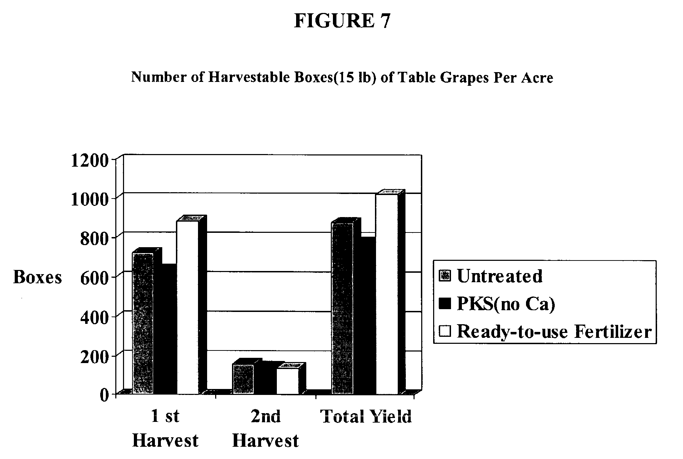

There was no increase in table grape yield between the tests conducted under the grower's standard and PKS. The ready-to-use fertilizer of the invention, however, provided a statistical increase in harvestable yield. These findings, are provided in **FIG. 7.** At harvest the plots receiving the ready-to-use fertilizer had a 17 % higher yield of harvestable grapes over PKS or the grower's standard.

### EXAMPLE 7

### Harvest Yield: Bell Peppers

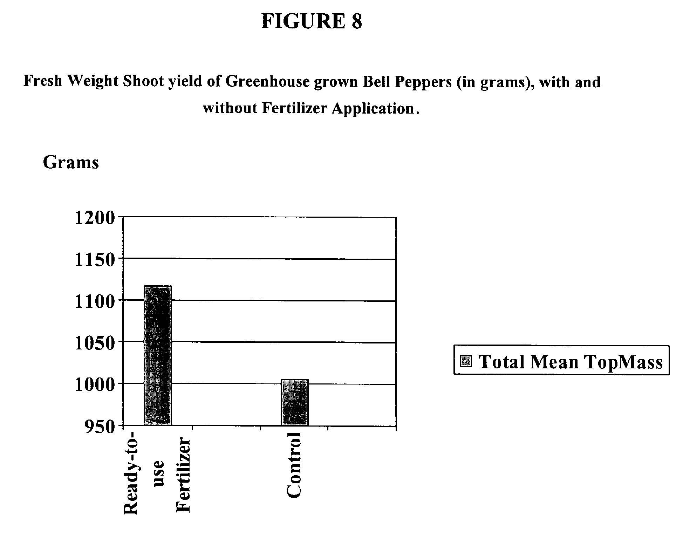

The ability of the fertilizer of the invention to increase the vegetative biomass yield of bell peppers was tested in a greenhouse study. Vegetative biomass was measured as the weight of the fresh shoots, or above-ground portion, of the plant. A ready-to-use fertilizer was applied to the foliage of bell peppers at the onset of bloom. Six weeks later, the bell peppers were harvested and the vegetative biomass was assessed. These findings, compared to the grower's standard control, are provided in **FIG. 8.**

The ready-to-use fertilizer provided a 10.2 % increase in vegetative biomass yield over the grower's standard.

### EXAMPLE 8

### Calcium Phosphite Fertilizer

A one liter fertilizer concentrate was prepared with an NPK analysis of 0-15-5, 7% Ca and 1.5% S. It was packaged in a one-container system where 1 liter contained (all amounts are kg/kg): 0.5515 of water; 0.02 of a naphthalenesulfonic acid, polymer with formaldehyde, sodium salt [CAS 9084-06-4]; 0.05 of hydroxysuccinic acid; 0.03 of 2-hydroxy-1,2,3-propanetricarboxylic acid; 0.047 of dimethyl sulfone; 0.21 of calcium phosphite; 0.07 of potassium hydroxide; 0.001 of xanthan gum; 0.01 of glycerine; 0.0005 of 1,2-benzisothiazolin-3-one, or Proxel; and 0.01 of phosphorous acid. This fertilizer concentrate was assembled according to the methods described in Section III of this application, and had a pH of between 6.0 and 9.0. Prior to formulation, the calcium phosphite is ground to a particle size of between about 0.5 and about 25 microns, with an ideal grind where at least 50 % of the material has a particle size of between about 1-10 microns.

### EXAMPLE 9

### Calcium Phosphite Fertilizer

A one liter fertilizer concentrate was prepared with an NPK analysis of 0-15-5, 7% Ca and 1.5% S. It was packaged in a one-container system where 1 liter contained (all amounts are kg/kg): 0.5515 of water; 0.02 of a naphthalenesulfonic acid, polymer with formaldehyde, sodium salt [CAS 9084-06-4]; 0.05 of hydroxysuccinic acid; 0.03 of 2-hydroxy-1,2,3-propanetricarboxylic acid; 0.047 of dimethyl sulfone; 0.21 of calcium phosphite; 0.07 of potassium hydroxide; 0.001 of xanthan gum; 0.01 of glycerine; 0.0005 of 1,2-benzisothiazolin-3-one, or Proxel; and 0.01 of phosphorous acid. This fertilizer concentrate was assembled according to the methods described in Section III of this application, and had a pH of between 6.0 and 9.0. The final formulated product is ground to a particle size of between about 0.5 and about 25 microns, with an ideal grind where at least 50 % of the material has a particle size of between about 1-10 microns.

### EXAMPLE 10

### Calcium Phosphite Fertilizer

A one liter fertilizer concentrate was prepared with an NPK analysis of 0-15-5, 7% Ca and 1.5% S. It was packaged in a one-container system where 1 liter contained (all amounts are kg/kg): 0.5515 of water; 0.02 of a naphthalenesulfonic acid, polymer with formaldehyde, sodium salt [CAS 9084-06-4]; 0.05 ofhydroxysuccinic acid; 0.03 of 2-hydroxy-1,2,3-propanetricarboxylic acid; 0.047 of dimethyl sulfone; 0.21 of calcium phosphite; 0.07 of potassium hydroxide; 0.001 of xanthan gum; 0.01 of glycerine; 0.0005 of 1,2-benzisothiazolin-3-one, or Proxel; and 0.01 of phosphorous acid. This fertilizer concentrate was assembled according to the methods described in Section III of this application, and had a pH of between 6.0 and 9.0. The final product is formulated to a viscosity of between about 500 to about 4000 centipose.

### EXAMPLE 11

### Calcium Phosphite Fertilizer

A one liter fertilizer concentrate was prepared with an NPK analysis of 0-15-5, 7% Ca and 1.5% S. It was packaged in a one-container system where 1 liter contained (all amounts are kg/kg): 0.5515 of water; 0.02 of a naphthalenesulfonic acid, polymer with formaldehyde, sodium salt [CAS 9084-06-4]; 0.05 of hydroxysuccinic acid; 0.03 of 2-hydroxy-1,2,3-propanetricarboxylic acid; 0.047 of dimethyl sulfone; 0.21 of calcium phosphite; 0.07 of potassium hydroxide; 0.001 of xanthan gum; 0.01 of glycerine; 0.0005 of 1,2-benzisothiazolin-3-one, or Proxel; and 0.01 of phosphorous acid. This fertilizer concentrate was assembled according to the methods described in Section III of this application, and had a pH of between 6.0 and 9.0. The final product is formulated to a viscosity of about 2000 centipose.

### EXAMPLE 12

### Calcium Phosphite Fertilizer

A one liter fertilizer concentrate was prepared with an NPK analysis of 0-15-5, 7% Ca and 1.5% S. It was packaged in a one-container system where 1 liter contained (all amounts are kg/kg): 0.5515 of water; 0.02 of a naphthalenesulfonic acid, polymer with formaldehyde, sodium salt [CAS 9084-06-4]; 0.05 ofhydroxysuccinic acid; 0.03 of 2-hydroxy-1,2,3-propanetricarboxylic acid; 0.047 of dimethyl sulfone; 0.21 of calcium phosphite; 0.008 of phosphate ester surfactant; 0.07 of potassium hydroxide; 0.001 of xanthan gum; 0.01 of glycerine; 0.0005 of 1,2-benzisothiazolin-3-one, or Proxel; and 0.01 of phosphorous acid. This fertilizer concentrate was assembled according to the methods described in Section III of this application, and had a pH of between 6.0 and 9.0.

### EXAMPLE 13

### Calcium Phosphite Fertilizer

A one liter fertilizer concentrate was prepared with an NPK analysis of 0-15-5, 7% Ca and 1.5% S. It was packaged in a one-container system where 1 liter contained (all amounts are kg/kg): 0.5515 of water; 0.02 of a naphthalenesulfonic acid, polymer with formaldehyde, sodium salt [CAS 9084-06-4]; 0.05 of hydroxysuccinic acid; 0.03 of 2-hydroxy-1,2,3-propanetricarboxylic acid; 0.047 of dimethyl sulfone; 0.21 of calcium phosphite; 0.1 of phosphate ester surfactant; 0.07 of potassium hydroxide; 0.001 of xanthan gum; 0.01 of glycerine; 0.0005 of 1,2-benzisothiazolin-3-one, or Proxel; and 0.01 of phosphorous acid. This fertilizer concentrate was assembled according to the methods described in Section III of this application, and had a pH of between 6.0 and 9.0.

### EXAMPLE 14

### Calcium Phosphite Fertilizer

A one liter fertilizer concentrate was prepared with an NPK analysis of 0-15-5, 7% Ca and 1.5% S. It was packaged in a one-container system where 1 liter contained (all amounts are kg/kg): 0.5515 of water; 0.02 of a naphthalenesulfonic acid, polymer with formaldehyde, sodium salt [CAS 9084-06-4]; 0.05 ofhydroxysuccinic acid; 0.03 of 2-hydroxy-1,2,3-propanetricarboxylic acid; 0.047 of dimethyl sulfone; 0.21 of calcium phosphite; 0.05 of phosphate ester surfactant; 0.07 of potassium hydroxide; 0.001 of xanthan gum; 0.01 of glycerine; 0.0005 of 1,2-benzisothiazolin-3-one, or Proxel; and 0.01 of phosphorous acid. This fertilizer concentrate was assembled according to the methods described in Section III of this application, and had a pH of between 6.0 and 9.0.

It is understood that the examples and embodiments described herein are for illustrative purposes only and that various modifications or changes in light thereof will be suggested to persons skilled in the art and are to be included within the spirit and purview of this application and scope of the appended claims. All publications, patents, and patent applications cited herein are hereby incorporated by reference in their entirety for all purposes.

## Claims

1. A fertilizer concentrate comprising:
a suspension of calcium phosphite
wherein
said calcium phosphite is present in an amount of about 0.125 kg of calcium phosphite/kg of fertilizer concentrate or greater, and
said suspension is a member selected from an aqueous suspension and a non-aqueous suspension.

2. The fertilizer concentrate according to claim 1, further comprising an organic acid.

3. The fertilizer concentrate according to claim 2, wherein said organic acid is a member selected from monocarboxylic acids, dicarboxylic acids and tricarboxylic acids.

4. The fertilizer concentrate according to claim 2 or 3, wherein said organic acid is citric acid.

5. The fertilizer concentrate according to claim 2 or 3, wherein said organic acid is malic acid.

6. The fertilizer concentrate according to any of claims 2 to 5, wherein said organic acid is present in an amount of from about 0.005 kg/kg to about 0.2 kg/kg.

7. The fertilizer concentrate according to claim 4, wherein said citric acid is present in an amount of from about 0.005 kg/kg to about 0.2 kg/kg.

8. The fertilizer concentrate according to claim 5, wherein said malic acid is present in an amount of from about 0.005 kg/kg to about 0.2 kg/kg.

9. The fertilizer concentrate according to any of claims 1 to 8, further comprising a sulfur compound.

10. The fertilizer concentrate according to claim 9, wherein said sulfur compound is a member selected from sulfone, sulfate, sulfide, and sulfite.

11. The fertilizer concentrate according to claim 10, wherein said sulfur compound is a sulfone, and wherein said sulfone is dimethyl sulfone.

12. The fertilizer concentrate according to any of claims 9 to 11, wherein said sulfur compound is present in an amount of from about 0.01 kg/kg to about 0.2 kg/kg.

13. The fertilizer concentrate according to any of claims 1 to 12, further comprising a thickener.

14. The fertilizer concentrate according to claim 13, wherein said thickener is xanthan gum.

15. The fertilizer concentrate according to claim 13 or 14, wherein said thickener is present in an amount of from about 0.001 kg/kg to about 0.05 kg/kg.

16. The fertilizer concentrate according to any of claims 1 to 15, further comprising a humectant.

17. The fertilizer concentrate according to claim 16, wherein said humectant is a polyalcohol.

18. The fertilizer concentrate according to claim 16 or 17, wherein said humectant is present in an amount of from about 0.001 kg/kg to about 0.2 kg/kg.

19. The fertilizer concentrate according to any of claims 1 to 18, further comprising an antimicrobial.

20. The fertilizer concentrate according to claim 19, wherein said antimicrobial is 1,2-benzisothiazolin-3-one.

21. The fertilizer concentrate according to claim 19 or 20, wherein said antimicrobial is present in an amount of from about 0.0005 kg/kg to about 0.05 kg/kg.

22. The fertilizer concentrate according to any of claims 1 to 21, further comprising a naphthalene condensate.

23. The fertilizer concentrate according to claim 22, wherein said naphthalene condensate is a copolymer.

24. The fertilizer concentrate according to claim 23, wherein said copolymer comprises formaldehyde and a naphthalene-containing compound, wherein said naphthalene-containing compound is a member selected from naphthalene sulfonic acid and salts thereof.

25. The fertilizer concentrate according to claim 23 or 24, wherein said naphthalene condensate is present in an amount of from about 0.005 kg/kg to about 0.05 kg/kg.

26. The fertilizer concentrate according to any of claims 1 to 25, further comprising a pesticide.

27. The fertilizer concentrate according to claim 26, wherein said pesticide is mancozeb.

28. The fertilizer concentrate according to claim 26 or 27, wherein said pesticide is present in an amount of from about 0.01 kg/kg to about 0.6 kg/kg.

29. The fertilizer concentrate according to any of claims 1 to 28, further comprising a plant growth regulator.

30. The fertilizer concentrate according to claim 29, wherein said plant growth regulator is gibberellic acid.

31. The fertilizer concentrate according to claim 29 or 30, wherein said plant growth regulator is present in an amount of from about 0.0005 kg/kg to about 0.1 kg/kg.

32. The fertilizer concentrate according to any of claims 1 to 31, further comprising a herbicide.

33. The fertilizer concentrate according to claim 32, wherein said herbicide is a sulfonyl urea.

34. The fertilizer concentrate according to claim 32 or 33, wherein said herbicide is present in an amount of from about 0.01 kg/kg to about 0.6 kg/kg.

35. The fertilizer concentrate according to any of claims 1 to 34, further comprising a boron compound.

36. The fertilizer concentrate according to claim 35, wherein said boron compound is a member selected from boric acid and borate.

37. The fertilizer concentrate according to claim 35 or 36, wherein said boron compound is present in an amount of from about 0.001 kg/kg to about 0.05 kg/kg.

38. The fertilizer concentrate according to any of claims 1 to 37, further comprising phosphorus-containing acid is a member selected from phosphoric acid, phosphorous acid, hypophosphorous acid, polyphosphorous acid, polyhypophosphorous acid and combinations thereof.

39. The fertilizer concentrate according to claim 38, wherein said phosphorus-containing acid is phosphorous acid.

40. The fertilizer concentrate according to claim 38 or 39, wherein said phosphorus-containing acid is present in an amount of from about 0.01 kg/kg to about 0.5 kg/kg.

41. The fertilizer concentrate according to any of claims 1 to 40, further comprising an inorganic base.

42. The fertilizer concentrate according to claim 41, wherein said inorganic base is a member selected from potassium hydroxide, calcium hydroxide, sodium hydroxide, ammonium hydroxide, and their respective oxides.

43. The fertilizer concentrate according to claim 41 or 42, wherein said inorganic base is present in an amount of from about 0.01 kg/kg to about 0.5 kg/kg.

44. The fertilizer concentrate according to any of claims 1 to 43, further comprising a plant nutrient, wherein said plant nutrient is a member selected from nitrogen, potassium, magnesium, iron, manganese, molybdenum, zinc and copper.

45. The fertilizer concentrate according to any of claims 1 to 44, wherein said fertilizer has a pH that presents its separation into two phases.

46. The fertilizer concentrate according to any of claims 1 to 45, wherein said fertilizer has a pH of from about 5.0 to about 9.5.

47. The fertilizer concentrate according to claim 46, wherein said fertilizer has a pH of about 8.0.

48. A ready-to-use fertilizer, comprising the fertilizer concentrate of any of claims 1 to 47 and a diluent.

49. The ready-to-use fertilizer of claim 48, wherein said diluent is a liquid.

50. The ready-to use fertilizer of claim 48 or 49, wherein the ratio of fertilizer concentrate to diluent is from about 1:10 to about 1:10,000.

51. A multiple buffered calcium and phosphorous containing fertilizer concentrate comprising:
(i) a first buffer system comprising a phosphorous acid and a salt of a phosphorous acid; and
(ii) a second buffer system comprising an organic acid and a salt of an organic acid wherein said organic acid is present in an amount of about 0.02 kg/kg or greater.

52. The fertilizer concentrate according to claim 51, having two buffering systems.

53. The fertilizer concentrate according to claim 51 or 52, such that when said fertilizer concentrate is diluted with water, there is formed a ready-to-use fertilizer having a foliage-acceptable pH for calcium and phosphorous uptake.

54. A method of providing calcium and phosphorus to a plant, said method comprising:
(a) mixing water with the fertilizer concentrate of any of claims 1 to 47, thus forming a ready-to-use fertilizer; and
(b) applying said ready-to-use fertilizer to the foliage of a plant.

55. A method of promoting growth in a plant through foliar application of a ready-to-use fertilizer, said method comprising:
(a) forming a ready-to-use fertilizer through adding water to the fertilizer concentrate of any of claims 1 to 47; and
(b) applying said ready-to-use fertilizer to the foliage of a plant.

56. A method of providing calcium and phosphorus to a seed, said method comprising:
(a) mixing water and the fertilizer concentrate of any of claims 1 to 47, thus forming a ready-to-use fertilizer that has a seed-acceptable pH for calcium and phosphorus uptake; and
(b) applying said ready-to-use fertilizer to the seed.

57. A method of preventing the browning of leaves and/or fruit and/or storage organs, said method comprising:
(a) applying a ready-to-use fertilizer to a plant in an amount sufficient to prevent the browning of its leaves and/or fruit and/or storage organs.

58. A slow-release method of providing phosphite to a plant, said method comprising:
(a) applying a solid fertilizer concentrate or a solid ready-to-use fertilizer in an amount sufficient to provide phosphite to the plant.

59. A method of extending the shelf-life of a plant, said method comprising:
(a) applying a ready-to-use fertilizer to said plant at a time prior to crop harvest,
wherein
the time prior to crop harvest is a member selected from twelve hours and seven days.

60. A method of reducing the amount of nitrogen in a tissue of a plant, said method comprising:
(a) applying a ready-to-use fertilizer to said plant at a time prior to crop harvest,
wherein
the time prior to crop harvest is a member selected from twelve hours and fifty days.

61. A method of increasing the amount of calcium absorbed through the roots of a plant, said method comprising:
(a) applying a ready-to-use fertilizer to a member selected from the soil surrounding the plant and directly to the roots of a plant, at a time prior to crop harvest.

62. The fertilizer concentrate according to any of claims 1 to 47, wherein the calcium phosphite has a particle size, and said particle size prior to formulation is a member selected from about 0.5 microns to about 25 microns.

63. The fertilizer concentrate according to any of claims 1 to 47, wherein the calcium phosphite has a particle size, and said particle size of the calcium phosphite in the final product is a member selected from about 0.5 microns to about 25 microns.

64. The fertilizer concentrate according to any of claims 1 to 47 or 62 or 63, wherein the fertilizer concentrate has a viscosity, and said viscosity is a member selected from about 500 centipose to about 5000 centipose.
